# EUROPEAN PATENT SPECIFICATION

(11) **EP 2 814 091 B1**
(45) Date of publication and mention of the grant of the patent: **26.08.2020**
(21) Application number: 13171347.1
(22) Date of filing: 11.06.2013
(51) Int. Cl.: H01M 4/04, H01M 10/0525, H01M 10/0562, H01M 10/0565

(54) **Solid state battery with surface ion-diffusion enhancement coating and method for manufacturing thereof.**
Feststoffbatterie mit Beschichtung zur Verbesserung der Oberflächenionendiffusion und Herstellungsverfahren dafür
Batterie à l'état solide avec un revêtement d'amélioration de diffusion d'ions en surface et son procédé de fabrication

(43) Date of publication of application: 17.12.2014
(73) Proprietor: IMEC VZW, 3001 Leuven (BE)
(72) Inventor: Vereecken, Philippe M., 3001 Leuven (BE); Huyghebaert, Cedric, 3001 Leuven (BE)
(74) Representative: Patent Department IMEC

(56) References cited:
- EP-A1- 2 579 363
- WO-A1-00/25378
- JP-A- 2004 193 041
- US-B1- 8 119 273

## Description

### FIELD OF THE INVENTION

The present invention relates solid state batteries and more specific to thin film solid state batteries. Further the present invention relates to a surface ion-diffusion enhancement coating for a thin film solid state battery. Furthermore the invention relates to methods for manufacturing of a thin film solid-state battery cell.

### STATE OF THE ART

Solid state batteries have multiple advantages in comparison with the batteries using liquid electrolytes which need membranes to separate cathode/anode and impermeable casing to avoid leakage. For example, a solid electrolyte allows shorter distances between anode and cathode allowing more compact configurations and higher diffusion rates and thereby, power. Additionally, there is no risk for thermal runaway, i.e. no need for bulky power/safety management and cooling systems. Higher effective energy density as higher percentage of capacity may be used without penalty on cycle life time.

Among the solid state batteries, thin film batteries and especially thin film lithium batteries are gaining more and more interest. As explained in detail in a review paper by Patil et. al. (Materials Research Bulletin 43 (2008) 1913-1942) a thin film battery is composed of several electrochemical cells that are connected in series and/or in parallel to provide the required voltage and capacity. Each cell consists of a cathode and an anode electrode separated by an electrolyte, which enable ion transfer between the two electrodes. Once these electrodes are connected externally, the chemical reactions proceed in electrodes, thereby liberating electrons and enabling the current to be tapped by the user. Moreover, in rechargeable cells reactions at both anode and cathode electrodes have to be highly reversible to maintain the specific charge for hundreds of charge/discharge cycles. Among the various existing technologies thin film lithium batteries are considered as the most competitive power source because of their high volumetric energy density and gravimetric energy density, superior power capability and design flexibility.

WO 00/25378 A1 discloses thin-film micro-electrochemical energy storage cells (MEESC) such as microbatteries and double-layer capacitors comprising two thin layer electrodes, an intermediate thin layer of a solid electrolyte and optionally a fourth thin current collector layer, said layers being deposited in sequence on a surface of the substrate. The MEESC is characterized in that the substrate is provided with a plurality of through cavities of arbitrary shape, with high aspect ratio. By using the substrate volume, an increase in the total electrode area per volume is accomplished. The two thin layer electrodes and the intermediate thin layer of solid electrolyte are deposited also throughout inner surfaces of the through cavities.

### SUMMARY OF THE INVENTION

In a first aspect the invention is related to a thin-film solid-state battery cell comprising an anode, a cathode and a solid electrolyte matrix,
- wherein at least the anode or the cathode comprises an active electrode (a functional battery material) having pores and wherein an inner surface of the pores is coated with a first coating comprising a thin film made of at least one layer of a dielectric material, a conductive material, a solid electrolyte material or a combination thereof (first surface-ion diffusion enhancement (SIDE) coating (20)) and
- wherein the solid electrolyte matrix comprises an electronically insulating matrix for a solid electrolyte, the electronically insulating matrix having pores or passages and wherein an inner surface of the pores or the passages is coated with a second coating comprising a thin film made of at least one layer of a dielectric material, a solid electrolyte material or a combination thereof (second SIDE coating).

In one-embodiments the first coating (first SIDE coating) is a thin film comprising/consisting of a solid electrolyte material such as an inorganic electrolyte material or a polymer electrolyte.

In another embodiments the first coating (first SIDE coating) is a thin film comprising/consisting of a dielectric material and/or a conductive material suitable to enhance the ionic surface diffusion. The first SIDE coating may be a continuous layer or a discontinuous layer.

Further in embodiments of the invention, the conductive material is one of a metal, a metallic compound, carbon or a conductive oxide.

Further in embodiments of the invention, the thin film is discontinuous and the first coating (first SIDE coating) further comprises a conduction salt to enhance the ionic conductivity.

In embodiments of the invention, the electronically insulating matrix is a non-ion-conducting matrix. The non-ionic-conducting matrix comprises one of a microporous, a nanoporous or a mesoporous alumina, silica, hydrated aluminosilicates (zeolites), Metal Organic Frameworks (MOFs) or Anodized Aluminum Oxide (AAO).

In embodiments of the invention wherein the electronically insulating matrix is a non-ion-conducting matrix, the second coating (second SIDE coating) is a thin film comprising/consisting of a solid electrolyte material such as an inorganic electrolyte material or a polymer electrolyte.

Further in other embodiments of the invention wherein the electronically insulating matrix is a non-ion-conducting matrix, the second coating (second SIDE coating) comprises/consists of a thin film comprising/consisting a dielectric material to improve wettability and an ionic compound of an ion to diffuse, such as a Lithium salt.

In alternative embodiments of the invention, the electronically insulating matrix is an ion-conducting matrix.

The ion-conducting matrix may comprise a Lithium compound, a Lithium salt or Lithium oxide.

In embodiments of the invention wherein the electronically insulating matrix is an ion-conducting matrix, the second coating (second SIDE coating) is a thin film comprising/consistingof a dielectric material suitable to enhance the ionic surface diffusion.

The active electrode material (functional battery material) is either an ion-insertion material or an alloying material.

In specific embodiments of the invention, the active electrode material (functional battery material) is selected from the group consisting of LiCoO₂, MnO₂, LiMn₂O₄, LiFePO₄, LiNiO₂, Li₂FePO₄F, TiS₂, WO₃-V₂O₅, In₂Se₃, TiSₓO_{y}, V₂O₅-TeO₂, V₂O₅, MOₓ, Liₓ(Mn_{y}Ni_{1-y})₂₋ₓO₂ or Li-V₂O₅, Si, SiSn, Ge, GeSn, Sn, SnCu.

In embodiments of the invention, the solid-state battery further comprises two metal collectors, each of them in contact with an active electrode and one of the metal collectors overlying a substrate.

The substrate can be planar or can present topography (e.g. 3D structures such as pillars). Further, the substrate can be made of a semiconductor material, a metal, carbon nanosheets (CNS, which is a collection of vertically aligned graphitic sheets) or a plastic foil.

In a second aspect the invention is related to a method for manufacturing a thin-film solid-state battery cell comprising an anode, a cathode and a solid electrolyte matrix, comprising the following steps:
Providing a current collector on a substrate,
Depositing one of the anode or the cathode which comprises an active electrode (a functional battery material) having pores and
Forming a first coating (first surface-ion diffusion enhancement (SIDE) coating) comprising a thin film made of at least one layer of a dielectric material, a conductive material, a solid electrolyte material or a combination thereof, on an inner surface of the pores of the active electrode (functional battery material)
Forming the solid electrolyte matrix which comprises an electronically insulating matrix for a solid electrolyte having pores or passages
Forming a second coating (second surface-ion diffusion enhancement (SIDE) coating) comprising a thin film made of at least one layer of a dielectric material, a solid electrolyte material or a combination thereof, on an inner surface of the pores or the passages of the electronically insulating matrix.

In some embodiments the method of the invention discloses performing forming the first coating (first SIDE coating) and forming of at least a part of the second coating (second SIDE coating) simultaneously, in one process step, after forming the solid electrolyte matrix.

In embodiments of the invention, forming the first coating (first SIDE coating) and forming the second coating (second SIDE coating) is performed by Atomic Layer Deposition (ALD) or Molecular Layer Deposition (MLD).

In embodiments of the invention, forming the electronically insulating matrix which comprises low-κ materials is performed by CVD or spin-on deposition techniques.

### BRIEF DESCRIPTION OF THE DRAWINGS

All drawings are intended to illustrate some aspects and embodiments of the present disclosure. The drawings described are only schematic and are non-limiting.
Fig. 1 shows a schematic cross section of a thin film battery cell.
Fig. 2 illustrates schematically the delaminating interfaces and the cracked layers during the cycling of a thin film battery.
Fig. 3 shows schematically the solid state porous thin film battery according to the disclosure.
Fig. 4a shows a porous layer of electrochemically synthesized γ-MnO₂ which is formed conformal on a 3D substrate (Si pillars) according to the method of the invention.
Fig. 4b shows a porous MnO₂ layer formed on a planar substrate according to the method of the invention.

### DETAILED DESCRIPTION OF ILLUSTRATIVE EMBODIMENTS

It is an aim of the present invention to provide a thin film solid state battery which has improved performance with respect to the state of the art solid state batteries, namely at least one of an improved accessible or effective battery capacity, an improved battery power, an improved battery life time and an improved behavior at mechanical deformation.

It is another aim of the present invention to provide a coating layer suitable for a thin film solid state battery which improves at least one of the effective battery capacity, battery power and/or the battery life time.

Yet another aim of the present invention is to provide a method of manufacturing for a thin film solid state battery having an improved effective battery capacity and/or an improved battery lifetime and/or an improved behavior at mechanical deformation.

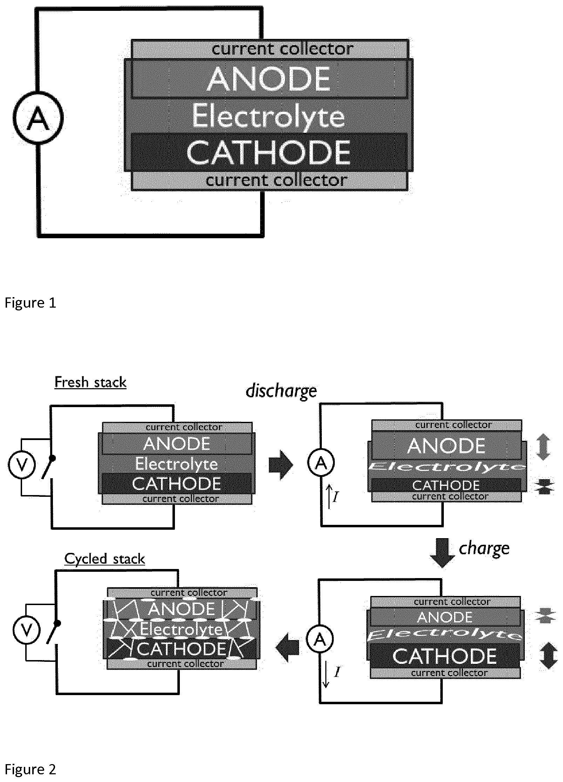

A thin film solid state battery cell comprises in general a cathode, an anode, and electrolyte sandwiched in between two current collectors as shown schematically in Fig. 1. The cell is constructed sequentially on a substrate.

Nowadays, lithium ion transfer cells dominate development in this sector, and the commercial interest in lithium ion transfer systems grows continuously. This is because the Li⁺ ion transfer battery is a very promising system for satisfying the demand for high specific energy and high power batteries for portable applications, especially for cellular phones and portable computers.

In thin film Li-ion battery (LiB) both electrodes are capable of reversible lithium insertion. Because of the difference in chemical potentials of lithium in the two electrodes, the transfer of lithium ions from the anode through the electrolyte into the cathode (discharge) delivers energy, whereas the reverse lithium transfer (charge) consumes energy. When the battery is being discharged, the lithium ions in the anode material (negative electrode) migrate to the cathode material (positive electrode), and a discharging current flows. When the battery is being charged, the lithium ions move into the opposite direction into to their original positions in the materials and a charging current flows. A thin film battery is fabricated by forming sequentially its components thereby producing multi-layered thin films by suitable techniques.

The materials that is the anode in discharge (negative electrode) becomes the cathode (negative electrode) when charging the battery. Herein further with anode material and cathode material are meant the materials that are the anodes and, respectively, the cathodes during battery operation (or discharge). The labeling in Fig. 2 follows the same convention. Through the disclosure, when referred to "anode material" it is meant the negative electrode material and when referred to "cathode material" it is meant the positive electrode material.

Although the thin film solid state batteries have multiple advantages with respect to the older technologies there are still issues which have to be addressed which are further shortly summarized:
For example, the thin film stack is a rigid structure with a far from ideal behavior with respect to mechanical deformation. The stress on the electrolyte is large as the negative and positive electrodes at each side of the electrolyte respectively shrink and expand during battery operation, and again expand and shrink during battery charge. For the Li ion battery, for example, upon discharge, the negative electrode (anode) takes up Li⁺ ions and swells, whereas the positive electrode (cathode) gives of Li⁺ ions and shrinks. Upon charging of the battery, the opposite process takes place. This continues shrinkage and swelling causes the delaminating of the layers at the interfaces and, in severe cases, embrittlement of the films themselves. Ionic contact between electrode and electrolyte (and electronic contact between the pieces of the embrittled electrode) is lost and the battery fails.

Planar thin film batteries can still work when films are made thick enough to disperse the strain (and by limiting the level/percentage of charge capacity used). However, for 3D thin film batteries, the films are generally thinner and the strain is even more prominent in the curved structures and in the corners. This is a major reason why solid-state 3D thin film batteries are underperforming. Attempts were done to use a polymer-gel (sandwiched between anode and cathode thin film layers) as a "plastic" interlayer to take up the mechanical deformation. However, this latter attempt disrupts the all solid-state concept, since a polymer-gel battery is manufactured with a solvent impregnated polymer which brings back with itself the known drawbacks of wet batteries.

Fig. 2 illustrates schematically the delaminating interfaces and the cracked layers during the cycling of a thin-film battery.

Another important parameter for solid state batteries is the accessible or effective battery capacity at a certain current (C-rate). This is determined by the thickness of the active electrode material as the charge/discharge rate is determined by the transport (diffusion and migration) of Li⁺ ions in the solid material.

For solid state batteries having active electrode made of powders which have a large surface to volume ratio the Li⁺ ions can diffuse in the active electrode material from all around, at least where contact with the electrolyte is provided. For thin film batteries, only the film surface (at the interface with electrolyte film) is available for Li⁺ insertion or extraction in/out the active electrode layer.

To improve access to Li⁺ ions, the active material can be made porous. Then, the pores can be easily accessed by the liquid solvent in wet batteries, but, up to know, impossible for solid-state batteries and polymer-gel batteries.

In its different aspects, the present invention discloses using porous materials for at least one of the active electrodes and for the solid electrolyte. Porous materials have larger plastic deformation window and are able to take the strain during the charge/discharge cycling. In general, the porous materials are known to have high inner/internal surface area values. However, the present disclosure does not limits itself to this advantageous aspect.

In its different aspects the present invention further discloses boosting the ion mobility in a solid state electrolyte and/or in a solid state insertion electrode by using the higher mobility of ions at interfaces compared to the bulk. As described in detail below, the porous structure of the active electrodes and/or the solid electrolyte matrix are coated with a surface ion diffusion enhancing coating, resulting in a high contribution of interfacial ion conduction to the total ion conduction through the materials. Thereby the ion conductivity is significantly increased, both in the porous electrodes and porous electrolytes.

In different embodiments of the present disclosure a large surface to volume ratio between solid electrolyte and active electrode is achieved by introducing an ion conducting compound as solid electrolyte into the porous matrix of the active electrode. At least one of the active electrodes is porous and the solid electrolyte matrix can be an electronically insulator material such an inorganic porous material or a polymer matrix that can host an ion conducting compound such as salts introduced by impregnation. The impregnation step may coat the solid electrolyte matrix and solid porous electrode in one and the same step, or can consist of multiple steps.

As illustrated by different embodiments, the solid state battery of the invention comprises one of the coated porous electrodes (a or b) and one of the coated porous electronically insulating matrix (c or d) below:
(a) a porous electrode with a non-ion conducting coating (such as a dielectric, metallic compound or polymer) inside the pores or openings to enhance interface diffusion.
(b) a porous electrode with ion conducting coating inside the pores or openings to promote ionic diffusion by interface diffusion.
(c) a porous electronically insulating matrix, which is also ionically insulating, in a form of a porous film (e.g. Alumina, silica) coated with a thin, continuous ion conducting coating (although it may have a very poor bulk ion conductivity) which has enhanced interface conduction. The porous electronically and ionically insulating matrix in the form of a porous film is therefore different than a composite electrolyte, which is usually a powder.
(d) a porous electronically insulating matrix, which is ionically conducting (although may have poor bulk ion conduction, such as Li₃PO₄) coated with a thin, preferably continuous dielectric film.

The present disclosure will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description are used for descriptive purposes and not necessarily for describing relative positions. It is to be understood that the terms so used are interchangeable under appropriate circumstances and that the embodiments of the invention described herein are capable of operation in other orientations than described or illustrated herein.

In the description provided herein, numerous specific details are set forth. However, it is understood that embodiments of the invention may be practiced without these specific details. In other instances, well-known methods, structures and techniques have not been shown in detail in order not to obscure an understanding of this description.

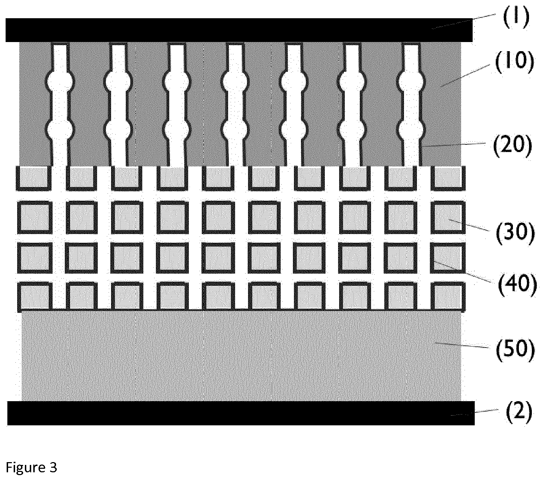

A first aspect of the invention discloses a thin-film solid-state battery cell (herein further references from Figure 3 are used) comprising an anode, a cathode and a solid electrolyte matrix,
- wherein at least the anode or the cathode comprises an active electrode (a functional battery material) (10) having pores and wherein an inner surface of the pores of the active electrode (functional battery material) is coated with a first coating (first surface ion-diffusion enhancement (SIDE) coating) (20) comprising a thin film made of at least one layer of a dielectric material, a conductive material, a solid electrolyte material or a combination thereof, and
- wherein the solid electrolyte matrix comprises an electronically insulating matrix (30) for a solid electrolyte, the electronically insulating matrix having pores or passages and wherein an inner surface of the pores or the passages of the electronically insulating matrix is coated with a second coating (second SIDE coating) (40) comprising a thin film made of at least one layer of a dielectric material, a solid electrolyte material or a combination thereof.

As is disclosed further in some embodiments of the invention, the first coating (first SIDE coating) (20) and at least a component of the second coating (second SIDE coating) (40) may have the same composition. Advantageously, the first coating (first SIDE coating) (20) and at least a component of the second coating (second SIDE coating) (40) (i.e. a thin film which is part of the second SIDE coating) can be applied in one process step on a stack of layers comprising the active electrode (functional battery material) (10) and the electronically insulating matrix (30) as detailed further in the second aspect of the invention.

Alternatively, the first coating (first SIDE coating) (20) and the second coating (second SIDE coating) (40) can have different composition. The different options for SIDE coatings are discussed in detail below.

Throughout the description when reference is made to a functional battery material (10) or an active electrode (10, 50), a material is meant wherein the actual electrochemical process takes place.

The functionality of the 'surface ion-diffusion enhancement" (SIDE) coating is based on the effect that ion-diffusion is much faster at an interface between an ionic compound (salt or oxide containing the ion which needs to diffuse) and a second material (typically an inert compound or dielectric) than through the bulk of the ionic compound. In those cases where electronic conduction is desired the inert compound can be metallic. The inert compound can also be another ionic compound as long as they do not intermix and create the needed electrical double layer that provides the enhanced ion movement at the interface.

Providing a large interfacial area leads to large surface diffusion component and thus lower total conductivity. The present disclosure exploits this phenomenon and applies it to the active electrode materials. Further by coating the active electrode (functional battery material) with the first coating (first SIDE coating) an intrinsic ionic conductor or electrolyte channel is present on the electrode surface without the need for introducing an electrolyte.

The active electrode material (functional battery material) is an ion-insertion material or an alloying material. In the ion insertion (e.g. Li-insertion) process, known also as ion intercalation, ions (e.g. Li) are inserted in a crystalline lattice. Alternatively, the active electrode material (functional battery material) can be an alloying material, such as Li-Si-alloys or Li-Sn-alloys. For a Li battery (LiB) the negative electrode (anode during battery operation, cathode during battery charging, herein further referred as anode) comprises Li metal, graphite, silicon, germanium, tin (Sn), Sn-oxides, Sn-nitrides, Sn-oxinitrides, TiO₂, Li₄Ti₅O₁₂, LiV₂O₅ or V₂O₅. For example, for LiB, Li₄Ti₅O₁₂ can be used as the negative electrode. As this spinel structure has a negligible volume change during charge/discharge, it can be used in nonporous form.

The positive electrode (cathode during battery operation, anode during battery charging, herein further referred as cathode) may comprise LiCoO₂, MnO₂, LiMn₂O₄, LiFePO₄, LiNiO₂, Li₂FePO₄F, TiS₂, WO₃-V₂O₅, In₂Se₃, TiSₓO_{y}, V₂O₅-TeO₂, V₂O₅, MOₓ, Liₓ(Mn_{y}Ni_{1-y})₂₋ₓO₂ or Li-V₂O₅. An example of porous active electrode material (functional battery material) is electrochemically deposited (EMD) MnO₂ which can be transformed to LiMn₂O₄ spinel.

Usually, lithium metal used for anode is prepared by vacuum thermal vapor deposition (VD). Solid electrolytes and cathode or sometimes anode materials of oxides are prepared by various sputtering techniques as RF -assisted sputtering or RF magnetron sputtering. In some examples chemical vapor deposition (CVD), chemical solution deposition (CSD), and electrostatic spray deposition (ESD) are used. Also plasma/laser assisted deposition techniques or sol-gel methods can be used, especially for cathode materials.

In embodiments of the disclosure, the first coating (first SIDE coating) applied on the internal surface of the pores of the active electrode (functional battery material) is a thin film which comprises a solid electrolyte material such as an inorganic electrolyte material or a polymer electrolyte. Preferably, the first coating (first SIDE coating) is a thin film which consists of a solid electrolyte material such as an inorganic electrolyte material or a polymer electrolyte.

Non-limitative examples of inorganic electrolyte also referred to as a thin solid electrolyte are LiTaO₃, LiAl₂O₄, Li₂SiO₃. Different insulating polymers can be used as host for salts (e.g. Li-ion salts) and form in combination therewith a polymer electrolyte. Illustrative examples of insulating polymers used as hosts are Poly-ethylene oxide (PEO), poly-propylene oxide (PPO), Poly-phenylene oxide (PPO), polyoxyphenylenes, (POP), Poly(methyl methacralate) PMMA, Poly(acrylonitrile) (PAN) or Poly(ethylene glycol) diacrylate (PEGDA). In an illustrative example of preparation method for such a polymer electrolyte, the insulating polymers are treated with a Li-salt in a solvent like e.g. acetonitrile and subsequently dried.

In other embodiments of the invention, the first coating (first SIDE coating) applied on the internal surface of the pores of the active electrode (functional battery material) is a thin film comprising a dielectric material or a conductive material suitable to enhance the ionic surface diffusion. Preferably, the first coating (first SIDE coating) is a thin film which consists of a dielectric material or a conductive material suitable to enhance the ionic surface diffusion.

In specific embodiments the first coating (first SIDE coating) is a thin film which comprises a dielectric material and a conductive material, as illustrated under the paragraph about nanolaminates as first coating (first SIDE coating).

The thin film used as first coating (first SIDE coating) can be continuous or discontinuous. In the latter case the first coating (first SIDE coating) may further comprise a conduction salt to enhance the ionic conductivity. The discontinuities in the thin film allow access to the active electrode material and to the electrolyte layer on top. Illustrative but non-limitative examples of a conduction salt is a Li salt.

In embodiments of the invention, the conductive material acting as the first coating (first SIDE coating) is one of a metal, a metallic compound, carbon or a conductive oxide. Illustrative but non-limitative examples of a conductive material are TiN, TaN, C, Ru, Pt or conductive oxides such as SnO₂, tin-doped indium oxide (ITO) and RuO₂. Embodiments of the invention wherein the first coating (first SIDE coating) consists of a conductive material have the additional advantage that next to the ionic conductance also electronic conductance is improved.

In other embodiments of the invention, the dielectric material acting as the first coating (first SIDE coating) can be an oxide such Al₂O₃, SiO₂, Ta₂O₃, HfO₂, SrO₂, SrSiO₄, MgO or any combinations or mixtures thereof. An example of a combination thereof is a nanolaminate coating made of Al₂O₃ and MgO. Many of these oxides which are suitable to function as a first coating (first SIDE coating) are known as high-κ dielectrics used in CMOS and RRAM applications. The term high-κ dielectric refers to a material with a dielectric constant κ higher than that of silicon dioxide. Alternatively, the dielectric material acting as the first coating (first SIDE coating) can be a polymer dielectric.

In yet other embodiments of the invention, the first coating (first SIDE coating) can be a nanolaminate comprising at least two selected from the group consisting of a dielectric, a metal, a polymer and a Li-compound. Non-limitative examples of a Li-compound suitable to be used in such nanolaminates are Li₂O, Li₂Co₃, Li₃PO₄ etc.

In different embodiments of the invention the solid electrolyte matrix comprises an electronically insulating matrix (30). In specific embodiments the electronically insulating matrix is a non-ion-conducting matrix. Examples of a non-ion-conducting matrix are microporous, nanoporous or mesoporous alumina, silica, hydrated aluminosilicates (zeolites), Metal Organic Frameworks (MOFs) and Anodized Aluminum Oxide (AAO).

In specific embodiments the non-ionic conducting matrix may comprise low-k materials formed by CVD or spin-on techniques.

In the embodiments wherein the electronically insulating matrix is a non-ion-conducting matrix, the second coating (second SIDE coating) (40) comprises a thin film comprising a solid electrolyte material such as an inorganic electrolyte material or a polymer electrolyte as described above in relation to the first coating (first SIDE coating). Preferably in this embodiment, the seond coating (second SIDE coating) comprises a thin film consisting of a solid electrolyte material such as an inorganic electrolyte material or a polymer electrolyte as described above in relation to the first coating (first SIDE coating).

Advantageously the inorganic electrolyte or the polymer electrolyte can act both as first coating (first SIDE coating) (for the active electrode) and as second coating (second SIDE coating) (for the non-ion-conducting matrix). The polymer electrolytes give elasticity to the stack of layers that form the solid state battery cell.

In other embodiments of the invention the electronically insulating matrix (30) is an ion-conducting matrix. Illustrative and non-limitative examples of an ion conducting matrix are lithium salts such as LiPF₆, LiBF₄ or LiClO₄ or lithium oxides.

In the embodiments of the invention wherein the electronically insulating matrix (30) is an ion-conducting matrix, the second coating (second SIDE coating) (40) comprises a thin film comprising a dielectric material suitable to enhance the ionic surface diffusion. Preferably in these embodiments, the second coating (second SIDE coating) (40) comprises a thin film consisting of a dielectric material suitable to enhance the ionic surface diffusion. The dielectric materials suitable to enhance the ionic surface diffusion were disclosed above in relation to the first coating (first SIDE coating). Advantageously, the dielectric material can act both as first coating (first SIDE coating) (for the active electrode) and as second coating (second SIDE coating) (for the ion-conducting matrix). In an example the ion conducting matrix is a porous Li₃PO₄ and the second SIDE coating is made of Al₂O₃.

Alternatively, in the embodiments wherein the electronically insulating matrix is a non-ion-conducting matrix, the second coating (second SIDE coating) may comprise a dielectric material as a first layer having the role to improve the wetting and introduce surface acidity on the surface of the non-ion-conducting matrix. Then, an ionic compound of the ion to diffuse (e.g. a Li-salt for Li- battery) is coated on top of the dielectric material.

The solid state battery cell of the disclosure may further comprise two metal collectors (1, 2), each of them in contact with an active electrode (a functional battery material) (10, 50) and one of them overlying a substrate. In specific embodiments the positive electrode current collector comprises TiN, Pt, Al or C and the negative electrode current collector comprises TiN or Cu. The metal collector may have a planar configuration or a 3D configuration, i.e. a non-planar surface presenting topography.

In various embodiments of the invention the substrate is a semiconductor material such a group IV semiconductor material, a metal (e.g metal foils), carbon nanosheets or a plastic foil. In the particular case wherein the substrate is made of silicon, a barrier of TiN is formed in between the collector and the silicon substrate.

Further, the solid state battery cell of the invention can be part of an assembly comprising at least one electronic device co-integrated (manufactured in an integrated process flow) or co-assembled (assembled as separate elements each of them having its own process flow) on a common substrate with the solid state battery cell.

The second aspect of the present invention discloses a method for manufacturing a thin-film solid-state battery cell comprising an anode, a cathode and a solid electrolyte matrix, the method comprising the following steps:
- Providing a current collector (10, 50) on a substrate,
- Depositing one of the anode or the cathode which comprises an active electrode (a functional battery material) (10) having pores and
- Forming a first coating (first surface-ion diffusion enhancement (SIDE) coating) (20) comprising a thin film made of at least one layer of a dielectric material, a conductive material, a solid electrolyte material or a combination thereof, on an inner (internal) surface of the pores of the active electrode (functional battery material) (10),
- Forming the solid electrolyte matrix which comprises an electronically insulating matrix (30) for a solid electrolyte having pores or passages, and
- Forming a second coating (surface-ion second diffusion enhancement (SIDE) coating) (40) comprising a thin film made of at least one layer of a dielectric material, a solid electrolyte material or a combination thereof, on an inner surface (the internal surface) of the pores or the passages of the electronically insulating matrix.

In the embodiments wherein a first coating (first SIDE coating) and at least part (a component) of the second coating (second SIDE coating) are the same or have substantially the same composition, forming/depositing the first coating (first SIDE coating) can be performed simultaneously (in one process step) with forming/depositing the second coating (second SIDE coating), after forming the electronically insulating matrix.

Forming the first and/or the second coating (SIDE coating) can be performed by Atomic Layer Deposition (ALD) or Molecular Layer Deposition (MLD) which are both conformal techniques which can reach inside the small pores/passages and which are also surface limited deposition techniques. Alternatively the deposition can be done by electrochemical deposition, chemical solution deposition or precipitation reactions. In the specific example wherein MnO₂ is the active electrode material (functional battery material), a thin polymer (thickness of about 15 nm or smaller) is be formed by electrochemical polymerization (anodic deposition of PPO from phenol solutions).

An exemplary process flow for producing a solid-state thin film battery cell according to embodiments of the invention will be described with reference to Figure 3.

First a current collector (1) is formed on a substrate (not shown). The substrate can be a Si wafer whereon a layer of SiO₂ (not shown) was formed prior to forming the current collector. In an example the current collector is a thin film formed by physical vapor deposition (PVD) which comprises C-coated TiN and has a thickness of about 30nm. The C-coating was performed by CVD, the TiN deposition by PVD or ALD. Alternatively the current collector can be made of Pt-coated TiN. On the current collector a thin film of a porous active electrode (10) is formed as shown in Fig 3. The porous active electrode is formed by electrochemical deposition (ECD) of MnO₂ which may be subsequently transformed to LiMn₂O₄ spinel by electrochemical lithiation either immediately post- deposition, or later in the process flow. Preferably the lithiation can be performed after forming the first coating (first SIDE coating) (20).

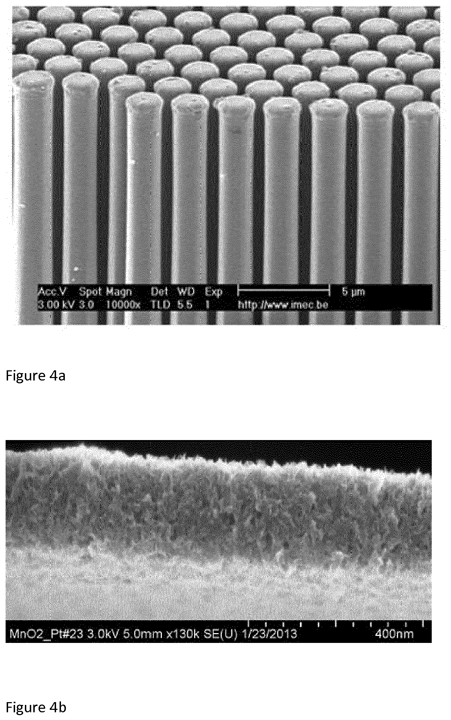

Figure 4a illustrates a porous layer of electrochemically synthesized γ-MnO₂ formed conformal on a Si pillars as illustration of a 3D substrate. Figure 4b shows the porous MnO₂ layer formed on a planar substrate. In this specific example, 200nm porous MnO₂ was formed continuous and conformal. The MnO₂ layer has a porosity of 50 to 70%.

As shown in Figure 3 a thin coating (20), also referred to as first coating (first SIDE coating), is deposited inside the pores of the active electrode material (10). In an example, the first coating (first SIDE coating) is an Al₂O₃ layer deposited by ALD. The thickness of the first coating (first SIDE coating) is between 0.2nm and 5nm, more preferably between 0.5nm and 1nm.

In an alternative embodiment, a PPO polymer coating is formed in the pores by anodization of phenol in acetonitrile solution.

Further, an electronically insulating matrix (30) is formed on the coated active electrode (10). In particular embodiments the electronically insulating matrix is a non-ion-conducting matrix with a porous structure and can be formed by e.g. chemical vapor deposition (CVD) or spin-on. The porous non-ion-conducting matrix can be made of low-κ materials/dielectrics and has a thickness of about 60-90 nm. In semiconductor manufacturing, a low-κ dielectric is a material with a small dielectric constant relative to silicon dioxide. In an alternative example about 100nm anodized aluminum oxide (AAO) with a pore size of about 8nm was used.

In a next step the functionalization of the electronically insulating matrix (30) is performed by deposition a second coating (second SIDE coating) (40) as shown in Figure 3. In different embodiments the first coating (first SIDE coating) (20) and the second coating (second SIDE coating) (40) may have the same composition and may be formed at the same time, in one process step, after the electronically insulating matrix is formed.

In some embodiments, an ALD alumina layer is deposited first inside the pores of the low- κ material (acting as electronically insulating matrix) to thereby improve the wetting and the surface acidity and to enhance the subsequent functionalization with Li-salt. A conformal Al₂O₃ layer of about 0.5nm is deposited in a particular example.

Next, impregnation in Li-salt solution (also referred herein as a conduction salt) is performed in order to form the coatings (SIDE coating) (40) and (20) with Li-salt. Examples of such Li-salts are LiPO₃, Li₃PO₄, LiH₂PO₄, Li₂HPO₄, Li₂CO₃, LiHCO₃, Li₂O, LiOH, LiI, LiClO₄ which are dissolved in solvents such as water, isopropyl-alcohol (IPA) or acetonitrile.

When the electronically insulating matrix (30) is made of AAO, the coating with alumina can omitted and direct functionalization of the AAO is performed.

Following the impregnation, an anneal is performed of the impregnated structure at temperature between about 70°C to about 250°C for 6 hours to 48 hours.

In a next step the second active electrode (50) (Fig. 3) is formed by e.g. PVD or CVD. The second electrode has a thickness up to 1 micron. In specific embodiments TiO₂ layer of about 30 nm is first deposited by ALD, and subsequent a Li₄Ti₅O₁₂ layer of about 200nm-500nm is deposited by RF-PVD

In a further step the second current collector (2) is formed by physical vapor deposition or an alternative deposition technique. The second current collector may comprise Ti, TiN, Cu and/or Al.

## Claims

1. A thin-film solid-state battery cell comprising an anode, a cathode and a solid electrolyte matrix,
- wherein at least the anode or the cathode comprises an active electrode (10) having pores and wherein an inner surface of the pores is coated with a first coating (20) comprising a thin film made of at least one layer of a dielectric material, a conductive material, a solid electrolyte material or a combination thereof, and
- wherein the solid electrolyte matrix comprises an electronically insulating matrix (30) for a solid electrolyte, the electronically insulating matrix having pores or passages and wherein an inner surface of the pores or the passages is coated with a second coating (40) comprising a thin film made of at least one layer of a dielectric material, a solid electrolyte material or a combination thereof.

2. The thin-film solid-state battery cell of claim 1, wherein the first coating (20) is a thin film comprising a solid electrolyte material such as an inorganic electrolyte material or a polymer electrolyte.

3. The thin-film solid-state battery cell of claim 1, wherein the first coating (20) is a thin film comprising a dielectric material and/or a conductive material suitable to enhance the ionic surface diffusion.

4. The thin-film solid-state battery of claim 3, wherein the conductive material is one of a metal, a metallic compound, or a conductive oxide.

5. The thin-film solid-state battery of any of the above claims, wherein the electronically insulating matrix (30) is a non-ion-conducting matrix.

6. The thin-film solid-state battery cell of claim 5, wherein the non-ionic-conducting matrix (30) comprises one of a microporous, a nanoporous or a mesoporous alumina, silica, hydrated aluminosilicates (zeolites), Metal Organic Frameworks (MOFs) or Anodized Aluminum Oxide (AAO).

7. The thin-film solid-state battery cell of any of the claims 5 or 6, wherein the second coating (40) is a thin film comprising a solid electrolyte material such as an inorganic electrolyte material or a polymer electrolyte.

8. The thin-film solid-state battery cell of any of the claims 5 or 6, wherein the second coating (40) comprises a thin film comprising a dielectric material to improve wettability and an ionic compound of an ion to diffuse, such as a Lithium salt.

9. The thin-film solid-state battery cell of any of the claims 1 to 4, wherein the electronically insulating matrix (30) is an ion-conducting matrix.

10. The thin-film solid-state battery cell of claim 9, wherein the ion-conducting matrix (30) comprises a Lithium salt or Lithium oxide.

11. The thin-film solid-state battery cell of any of the claims 9 or 10, wherein the second coating (40) is a thin film comprising a dielectric material suitable to enhance the ionic surface diffusion.

12. A method for manufacturing a thin-film solid-state battery cell comprising an anode, a cathode and a solid electrolyte matrix comprising the following:
○ Providing a current collector (1, 2) on a substrate,
○ Depositing one of the anode or the cathode which comprises an active electrode (10) having pores and
○ Forming a first coating (20) comprising a thin film made of at least one layer of a dielectric material, a conductive material, a solid electrolyte material or a combination thereof, on an inner surface of the pores of the active electrode (10)
○ Forming the solid electrolyte matrix which comprises an electronically insulating matrix (30) for a solid electrolyte having pores or passages
○ Forming a second coating (40) comprising a thin film made of at least one layer of a dielectric material, a solid electrolyte material or a combination thereof, on an inner surface of the pores or the passages of the electronically insulating matrix (30).

13. The method of claim 12, wherein the first coating (20) and least a part of the second coating (40) are deposited simultaneously, in one process step, after forming the solid electrolyte matrix (30).

14. The method of any of the claims 12 or 13, wherein forming the first coating (20) and forming the second coating (40) is performed by Atomic Layer Deposition (ALD) or Molecular Layer Deposition (MLD).

## Patentansprüche

1. Dünnschicht-Festkörperbatteriezelle, die eine Anode, eine Kathode und eine Festelektrolytmatrix umfasst,
- wobei mindestens die Anode oder die Kathode eine aktive Elektrode (10) umfasst, die Poren aufweist, und wobei eine Innenfläche der Poren mit einer ersten Beschichtung (20) beschichtet ist, die eine Dünnschicht umfasst, welche aus mindestens einer Lage eines dielektrischen Materials, eines leitfähigen Materials, eines Festelektrolytmaterials oder einer Kombination davon gefertigt ist, und
- wobei die Festelektrolytmatrix eine elektronisch isolierende Matrix (30) für einen Festelektrolyten umfasst, wobei die elektronisch isolierende Matrix Poren oder Durchgänge aufweist, und wobei eine Innenfläche der Poren oder der Durchgänge mit einer zweiten Beschichtung (40) beschichtet ist, die eine Dünnschicht umfasst, welche aus mindestens einer Lage eines dielektrischen Materials, eines Festelektrolytmaterials oder einer Kombination davon gefertigt ist.

2. Dünnschicht-Festkörperbatteriezelle nach Anspruch 1, wobei es sich bei der ersten Beschichtung (20) um eine Dünnschicht handelt, die ein Festelektrolytmaterial, wie etwa ein anorganisches Elektrolytmaterial oder einen Polymerelektrolyten umfasst.

3. Dünnschicht-Festkörperbatteriezelle nach Anspruch 1, wobei es sich bei der ersten Beschichtung (20) um eine Dünnschicht handelt, die ein dielektrisches Material und/oder ein leitfähiges Material umfasst, das geeignet ist, die ionische Oberflächendiffusion zu verstärken.

4. Dünnschicht-Festkörperbatterie nach Anspruch 3, wobei es sich beim leitfähigen Material um eines aus einem Metall, einer Metallverbindung oder einem leitfähigen Oxid handelt.

5. Dünnschicht-Festkörperbatterie nach einem der obigen Ansprüche, wobei es sich bei der elektronisch isolierenden Matrix (30) um eine nicht ionenleitende Matrix handelt.

6. Dünnschicht-Festkörperbatteriezelle nach Anspruch 5, wobei die nicht ionisch leitende Matrix (30) eines aus einem mikroporösen, einem nanoporösen oder einem mesoporösen Aluminiumoxid, Siliciumdioxid, hydratisierten Alumosilikaten (Zeolite), metallorganischen Gerüstverbindungen (MOFs) oder anodischem Aluminiumoxid (AAO) umfasst.

7. Dünnschicht-Festkörperbatteriezelle nach einem der Ansprüche 5 oder 6, wobei es sich bei der zweiten Beschichtung (40) um eine Dünnschicht handelt, die ein Festelektrolytmaterial, wie etwa ein anorganisches Elektrolytmaterial oder einen Polymerelektrolyten umfasst.

8. Dünnschicht-Festkörperbatteriezelle nach einem der Ansprüche 5 oder 6, wobei die zweite Beschichtung (40) eine Dünnschicht umfasst, die ein dielektrisches Material, um Benetzbarkeit zu verbessern, und eine ionische Verbindung eines Ions, das diffundiert werden soll, wie etwa ein Lithiumsalz umfasst.

9. Dünnschicht-Festkörperbatteriezelle nach einem der Ansprüche 1 bis 4, wobei es sich bei der elektronisch isolierenden Matrix (30) um eine ionenleitende Matrix handelt.

10. Dünnschicht-Festkörperbatteriezelle nach Anspruch 9, wobei die ionenleitende Matrix (30) ein Lithiumsalz oder Lithiumoxid umfasst.

11. Dünnschicht-Festkörperbatteriezelle nach einem der Ansprüche 9 oder 10, wobei es sich bei der zweiten Beschichtung (40) um eine Dünnschicht handelt, die ein dielektrisches Material umfasst, das geeignet ist, die ionische Oberflächendiffusion zu verstärken.

12. Verfahren zur Herstellung einer Dünnschicht-Festkörperbatteriezelle, die eine Anode, eine Kathode und eine Festelektrolytmatrix umfasst, welches Folgendes umfasst:
- Bereitstellen eines Stromkollektors (1, 2) auf einem Substrat,
- Abscheiden von einem aus der Anode oder der Kathode, die eine aktive Elektrode (10) umfasst, welche Poren aufweist, und
- Bilden einer ersten Beschichtung (20), die eine Dünnschicht umfasst, welche aus mindestens einer Lage eines dielektrischen Materials, eines leitfähigen Materials, eines Festelektrolytmaterials oder einer Kombination davon gefertigt ist, auf einer Innenfläche der Poren der aktiven Elektrode (10),
- Bilden der Festelektrolytmatrix, die eine elektronisch isolierende Matrix (30) für einen Festelektrolyten umfasst, welche Poren oder Durchgänge aufweist,
- Bilden einer zweiten Beschichtung (40), die eine Dünnschicht umfasst, welche aus mindestens einer Lage eines dielektrischen Materials, eines Festelektrolytmaterials oder einer Kombination davon gefertigt ist, auf einer Innenfläche der Poren oder der Durchgänge der elektronisch isolierenden Matrix (30).

13. Verfahren nach Anspruch 12, wobei die erste Beschichtung (20) und mindestens ein Teil der zweiten Beschichtung (40) nach dem Bilden der Festelektrolytmatrix (30) gleichzeitig, in einem Prozessschritt, abgeschieden werden.

14. Verfahren nach einem der Ansprüche 12 oder 13, wobei das Bilden der ersten Beschichtung (20) und Bilden der zweiten Beschichtung (40) mittels Atomlagenabscheidung (ALD) oder Molekularlagenabscheidung (MLD) durchgeführt wird.

## Revendications

1. Élément de batterie à l'état solide en films minces comprenant une anode, une cathode et une matrice d'électrolyte solide,
- dans lequel au moins l'anode ou la cathode comprend une électrode active (10) ayant des pores et dans lequel une surface interne des pores est revêtue d'un premier revêtement (20) comprenant un film mince fait d'au moins une couche d'un matériau diélectrique, d'un matériau conducteur, d'un matériau d'électrolyte solide ou d'une combinaison de ceux-ci, et
- dans lequel la matrice d'électrolyte solide comprend une matrice électroniquement isolante (30) pour un électrolyte solide, la matrice électroniquement isolante ayant des pores ou des passages et dans lequel une surface interne des pores ou des passages est revêtue d'un second revêtement (40) comprenant un film mince fait d'au moins une couche d'un matériau diélectrique, d'un matériau d'électrolyte solide ou d'une combinaison de ceux-ci.

2. Élément de batterie à l'état solide en films minces selon la revendication 1, dans lequel le premier revêtement (20) est un film mince comprenant un matériau d'électrolyte solide tel qu'un matériau d'électrolyte inorganique ou un électrolyte polymère.

3. Élément de batterie à l'état solide en films minces selon la revendication 1, dans lequel le premier revêtement (20) est un film mince comprenant un matériau diélectrique et/ou un matériau conducteur approprié pour augmenter la diffusion de surface ionique.

4. Batterie à l'état solide en films minces selon la revendication 3, dans laquelle le matériau conducteur est l'un d'un métal, d'un composé métallique ou d'un oxyde conducteur.

5. Batterie à l'état solide en films minces selon l'une quelconque des revendications précédentes, dans lequel la matrice électroniquement isolante (30) est une matrice conductrice non ionique.

6. Élément de batterie à l'état solide en films minces selon la revendication 5, dans lequel la matrice conductrice non ionique (30) comprend l'une d'une alumine microporeuse, nanoporeuse ou mésoporeuse, d'une silice, d'aluminosilicates hydratés (zéolites), de structures organométalliques (MOF) ou d'un oxyde d'aluminium anodisé (AAO).

7. Élément de batterie à l'état solide en films minces selon l'une quelconque des revendications 5 ou 6, dans lequel le second revêtement (40) est un film mince comprenant un matériau d'électrolyte solide tel qu'un matériau d'électrolyte inorganique ou un électrolyte polymère.

8. Élément de batterie à l'état solide en films minces selon l'une quelconque des revendications 5 ou 6, dans lequel le second revêtement (40) comprend un film mince comprenant un matériau diélectrique pour améliorer la mouillabilité et un composé ionique d'un ion à diffuser, tel qu'un sel de lithium.

9. Élément de batterie à l'état solide en films minces selon l'une quelconque des revendications 1 à 4, dans lequel la matrice électroniquement isolante (30) est une matrice conductrice ionique.

10. Élément de batterie à l'état solide en films minces selon la revendication 9, dans lequel la matrice conductrice ionique (30) comprend un sel de lithium ou un oxyde de lithium.

11. Élément de batterie à l'état solide en films minces selon l'une quelconque des revendications 9 ou 10, dans lequel le second revêtement (40) est un film mince comprenant un matériau diélectrique approprié pour augmenter la diffusion de surface ionique.

12. Procédé de fabrication d'un élément de batterie à l'état solide en films minces comprenant une anode, une cathode et une matrice d'électrolyte solide comprenant les suivants :
∘ Fourniture d'un collecteur de courant (1, 2) sur un substrat,
∘ Dépôt de l'une de l'anode ou de la cathode qui comprend une électrode active (10) ayant des pores et
∘ Formation d'un premier revêtement (20) comprenant un film mince fait d'au moins une couche d'un matériau diélectrique, d'un matériau conducteur, d'un matériau d'électrolyte solide ou d'une combinaison de ceux-ci, sur une surface interne des pores de l'électrode active (10)
∘ Formation de la matrice d'électrolyte solide qui comprend une matrice électroniquement isolante (30) pour un électrolyte solide ayant des pores ou des passages
∘ Formation d'un second revêtement (40) comprenant un film mince fait d'au moins une couche d'un matériau diélectrique, d'un matériau d'électrolyte solide ou d'une combinaison de ceux-ci, sur une surface interne des pores ou des passages de la matrice électroniquement isolante (30).

13. Procédé selon la revendication 12, dans lequel le premier revêtement (20) et au moins une partie du second revêtement (40) sont déposés simultanément, en une étape de procédé, après formation de la matrice d'électrolyte solide (30).

14. Procédé selon l'une quelconque des revendications 12 ou 13, dans lequel la formation du premier revêtement (20) et la formation du second revêtement (40) sont effectuées par dépôt de couche atomique (ALD) ou dépôt de couche moléculaire (MLD).
